# NEUE EUROPÄISCHE PATENTSCHRIFT

(11) **EP 1 657 731 B2**
(45) Veröffentlichungstag und Bekanntmachung des Hinweises auf die Entscheidung über den Einspruch: **10.09.2014**
(45) Hinweis auf die Patenterteilung: 26.08.2009
(21) Anmeldenummer: 04405704.0
(22) Anmeldetag: 16.11.2004
(51) Int. Cl.: F28D 15/02, F28D 15/04, F28D 15/06, H02G 5/10, F28F 21/06, H01H 9/52

(54) **Hochspannungsleistungsschalter mit Kühlung**
High voltage circuit breaker with cooling
Disjoncteur haute-tension avec dispositif de refroidissement

(43) Veröffentlichungstag der Anmeldung: 17.05.2006
(73) Patentinhaber: ABB Research Ltd., 8050 Zürich (CH)
(72) Erfinder: Lakner, Martin, 5413 Birmenstorf (CH); Chartouni, Daniel, 5400 Baden (CH); Mauroux, Jean-Claude, 5502 Hunzenschwill (CH); Schoenemann, Thomas, 5503 Schafisheim (CH); Kiefer, Jochen, 5415 Nussbaumen (CH); Zehnder, Lukas, 5405 Baden-Dättwil (CH); Mollenkopf, Marc, 5012 Schönenwerd (CH)
(74) Vertreter: ABB Patent Attorneys

(56) Entgegenhaltungen:
- DE-A1- 2 051 150
- DE-A1- 2 707 206
- DE-A1- 10 109 722
- GB-A- 1 162 339
- US-B1- 6 492 609

## Beschreibung

### Technisches Gebiet

Die Erfindung bezieht sich auf das Gebiet der Hochleistungsschaltertechnik. Sie bezieht sich auf einen Hochleistungsschalter und ein Verfahren zum Kühlen eines Innenleiters eines Hochleistungsschalters gemäss dem Oberbegriff der unabhängigen Patentansprüche.

### Stand der Technik

Ein derartiger Hochleistungsschalter und ein derartiges Verfahren sind beispielsweise aus EP 1 022 830 A1 bekannt. Zur Kühlung eines gehäusten Innenleiters eines Hochleistungsschalters sind dort Gebläse vorgesehen, durch welche eine den Innenleiter umströmende Zirkularströmung erzeugt wird. Das derart zirkulierte Gas nimmt Verlustwärme des Innenleiters auf und gibt diese dann an der Innenseite des Gehäuses ab. Das Gehäuse wiederum gibt Wärme an die Umgebungsluft ausserhalb des Gehäuses ab. Durch die Kühlung des Innenleiters wird eine erhöhte Stromtragfähigkeit erreicht.

Eine solche Anordnung hat den Nachteil, dass sie aktiv ist, also angetrieben werden muss. Ein Ausfall beispielsweise der Stromversorgung der Gebläse führt zum Ausfall der Kühlung und kann rasch zur Überschreitung zulässiger Temperaturgrenzwerte des Hochleistungsschalters führen. Auch bedarf ein solches Kühlsystem einer regelmässigen Wartung zur Sicherstellung der einwandfreien Funktion der Gebläse.

Aus GB 1 162339 ist Leistungsschalter mit Innenleiter und Metallgehäuse bekannt, welcher ein Isolierrohr besitzt, dass mit dem Innenleiter verbunden und nach aussen zum Gehäuse geführt wird, um mittels eines Antriebes eine Schaltbewegung auszuführen. Zur Kühlung des Innenleiters ist ein Kühlmittel führendes Rohr vorgesehen, das thermisch an den Innenleiter ankoppelt und als elektrisches Isolatorrohr nach aussen zum Gehäuse geführt wird. An dem Kühlrohr ist eine Pumpe angeschlossenen, so dass ein geschlossenes Kühlkreislauf existiert, in dem die Kühlflüssigkeit zirkuliert.

Aus DE2051 150 ist ein Wärmerohr für einen gekapselten Schalterpol bekannt, bei dem das Wärmerohr aus der Kapselung herausgeführt wird. Der Verdampfer des Wärmerohres ist als Ringraum ausgeführt, der die innere Strombahn umgibt, aber von ihr beanstandet ist und sie somit nicht berührt. Der Verdampfer des Wärmerohres ist lediglich mit der Innenseite der äusseren Kapselung in thermischen Kontakt, so dass das Wärmerohr vollständig auf Erdpotential der Kapselung liegt.

GB 1 390 908 offenbart einen elektrischen Leistungsschalter, welcher einen feststehenden Kontakt an einem Hohlleiter aufweist, in dem ein Wärmerohr integriert ist.

### Darstellung der Erfindung

Es ist deshalb Aufgabe der Erfindung, einen Hochleistungsschalter und ein Verfahren zum Kühlen eines Innenleiters eines Hochleistungsschalters der eingangs genannten Art zu schaffen, welche die oben genannten Nachteile nicht aufweisen. Insbesondere soll ein Hochleistungsschalter mit einem passiven und (nahezu) wartungsfreien Kühlsystem geschaffen werden.

Diese Aufgabe löst eine Vorrichtung und ein Verfahren mit den Merkmalen der unabhängigen Patentansprüche.

Ein Hochleistungsschalter, dessen Innenleiter (auch als Aktivteil bezeichnbar) gekühlt wird, kann unter Einhaltung von durch einschlägige Normen vorgegebenen Temperatur-Grenzwerten höhere Ströme tragen als ein ungekühlter Hochleistungsschalter. Die Stromtragfähigkeit eines Hochleistungsschalters kann also umso mehr erhöht werden je effizienter eine vorgesehene Kühlvorrichtung die am Innenleiter entstehende Verlustwärme abzuführen vermag.

Ein erfindungsgemässer Hochleistungsschalter mit einem länglich erstreckten Innenleiter und einem gehäuseartig den Innenleiter umgebenden Aussenleiter (auch als Passivteil oder Rückleiter bezeichenbar) ist dadurch gekennzeichnet, dass zum Abführen von Wärmeenergie (im allgemeinen vor allem Verlustwärme) des Innenleiters mindestens ein Wärmerohr vorgesehen ist, welches zur Bildung einer elektrischen Isolationsstrecke einen Isolationshohlkörper aufweist. Mit Vorteil erstreckt sich das Wärmerohr von dem Innenleiter bis nahe dem Aussenleiter, bis zu dem Aussenleiter oder besonders vorteilhaft bis ausserhalb des Aussenleiters.

Ein Wärmerohr (auch als Heat Pipe bekannt) ist ein Mittel zum Abführen der Wärme durch Verdampfen eines Arbeitsmediums in einem als Verdampfer bezeichneten Abschnitt des Wärmerohres und Kondensieren des Arbeitsmediums in einem als Kondensator bezeichneten Abschnitt des Wärmerohres, wobei Mittel zur Rückführung des Arbeitsmediums vom Kondensator zum Verdampfer vorgesehen sind. Vorteilhaft ist das Wärmerohr hermetisch geschlossen, so dass ein geschlossener Kreislauf darin entstehen kann. Eine längliche oder röhrenartige Form des Wärmerohrs ist vorteilhaft, aber nicht notwendig. Als Mittel zur Rückführung des Arbeitsmediums vom Kondensator zum Verdampfer kann einfach ein Hohlkörper genommen und so angeordnet werden, dass durch die Gravitation das flüssige Arbeitsmedium zurückgeführt werden, oder es kann auch ein Material verwendet werden, dass den Rücktransport durch Kapillarkräfte bewirkt.

Ein solches Wärmerohr mit einem Isolationshohlkörper kann eine Potentialdifferenz überbrücken, insbesondere eine zwischen Innenleiter und Aussenleiter anliegende Hochspannung. Das Verdampfen eines in dem Wärmerohr vorgesehenen Arbeitsmediums kann somit auf einem anderen elektrischen Potential stattfinden als das Kondensieren des Arbeitsmediums.

Ein Wärmerohr ist eine passive Kühlvorrichtung. Es bedarf keiner Stromzufuhr oder einer anderen Versorgung. Als ein Kühlsystem mit einem hermetisch geschlossenen Kreislauf bedarf es in der Regel keiner Wartung und kann im allgemeinen über Jahre und Jahrzehnte wartungsfrei funktionieren.

Das Wärmerohr und der Aussenleiter müssen sich nicht notwendigerweise berühren. Mit Vorteil sind sie mechanisch miteinander verbunden oder ineinander integriert. Zum Beispiel kann der Aussenleiter vorteilhaft den Kondensator-Abschnitt des Wärmerohrs stützen. Mit Vorteil sind Wärmerohr und Aussenleiter aber elektrisch miteinander verbunden, insbesondere geerdet.

Der Innenleiter ist im allgemeinen rohrförmig oder hohlzylindrisch ausgebildet. Der den Rückstrom führende Aussenleiter bildet eine Kapselung, die im allgemeinen geerdet ist. Im Betriebsfall liegt zwischen dem Innenleiter und dem Aussenleiter eine Hochspannung an.

Für einen Hochleistungsschalter sind die Nennspannungen grösser als 1 kV oder eher von der Grössenordnung 10 kV, oder sie betragen mehrere 10 kV bis mehrere 100 kV. Überspannungen (durch Blitzstösse) liegen typischerweise bei 100 kV bis mehreren 100 kV. Ströme und Rückströme von Hochleistungsschaltern sind von der Grössenordnung 1 kA oder 10 kA (Nennstrom), oftmals 20 kA bis 30 kA; die Kurzschlusströme sind etwa eine Grössenordnung grösser. Ein Hochleistungsschalter ist für Leistungen der Grössenordnung 100 kW oder mehrere 100 MW oder bis im Gigawatt-Bereich ausgelegt. Solche Ströme, Spannungen und Leistungen bedingen eine bauliche Realisierung des Schalters und eine Symmetrie des Aufbaus des Hochleistungsschalters, wie sie beispielsweise für Mittelspannungs- oder Niederspannungsschalter nicht notwendig sind.

Die abzuführende Wärme entsteht im wesentlichen durch ohmsche Verluste im Innenleiter. Es können beispielsweise auch noch weitere Verluste hinzukommen, wie solche durch den Skineffekt, oder Wirbelstrom- und Hystereseverluste.

Vorteilhaft beinhaltet das Wärmerohr ein Arbeitsmedium zum Abführen der Wärmeenergie durch Verdampfen des Arbeitsmediums in einem als Verdampfer bezeichneten Abschnitt des Wärmerohres und Kondensieren des Arbeitsmediums in einem als Kondensator bezeichneten Abschnitt des Wärmerohres, wobei der Kondensator in engem thermischen Kontakt mit dem Aussenleiter ist und/oder eine Vorrichtung zur Wärmeabgabe aufweist, und wobei der Verdampfer in engem thermischen Kontakt mit dem Innenleiter ist.

Durch den engen thermischen Kontakt wird eine besonders erffiziente Kühlung erreicht. Als Vorrichtungen zur Wärmeabgabe kommen vorteilhaft passive Kühlvorrichtungen in Frage. Vorteilhaft wird die Wärme an die den Aussenleiter umgebende Umgebungsluft abgegeben. Beispielsweise kann eine Kühlrippenanordnung vorgesehen werden, die am Aussenleiter befestigt ist, oder die Aussenwand des Wärmerohres kann, zum Beispiel durch Falten, Kühlrippen bilden.

Erfindungsgemäss weist das Wärmerohr einen flexibel verformbaren Abschnitt auf. Bei Schaltvorgängen kommt es im allgemeinen zu Erschütterungen des Hochleistungsschalters, durch welche Relativbewegungen zwischen Innenleiter und Aussenleiter bewirkt werden. Um eine hohe mechanische Belastung des Wärmerohrs zu vermeiden, welche beispielsweise zu Undichtigkeiten des Wärmerohrs, insbesondere im Bereich des Isolationshohlkörpers führen könnten, kann als ein flexibel verformbarer Abschnitt ein Mittel zur mechanischen Entkopplung, beispielsweise ein Balg, ein Faltenbalg oder ein elastischer Abschnitt wie beispielsweise ein Schlauchstück, vorgesehen werden. Dieses Mittel kann gleichzeitig auch ein Mittel zur Aufnahme von thermomechanischen Spannungen (aufgrund von Wärmeausdehnungen) sein, oder es kann dafür auch ein separates Mittel vorgesehen sein (ebenfalls beispielsweise ein Balg, ein Faltenbalg oder ein elastischer Abschnitt wie beispielsweise ein Schlauchstück). Ein solches Mittel und/oder das Mittel zur mechanischen Entkopplung kann auch dem Ausgleich von Bauteil- und Fertigungstoleranzen dienen.

In einer vorteilhaften Ausführungsform ist das Wärmerohr als ein Thermosiphon ausgebildet. Bei einem als Thermosiphon ausgestalteten Wärmerohr findet der Rücktransport des kondensierten Arbeitsmediums (vorwiegend) durch die Gravitation statt. Somit ist der Kondensator (im Gravitationsfeld) höher angeordnet als der Verdampfer, und zwischen diesen muss entlang des Wärmerohres ein monotones Gefälle sein.

In einer weiteren vorteilhaften Ausführungsform beinhaltet das Wärmerohr ein Mittel zur Rückführung von kondensiertem Arbeitsmedium zum Verdampfer durch Kapillarkräfte. Eine solche Ausführungsform wird vorzugsweise dann eingesetzt, wenn der Kondensator unterhalb von dem Verdampfer angeordnet ist; sie kann aber auch in Verbindung mit einem Thermosiphon eingesetzt werden. Als Mittel zur Rückführung von kondensiertem Arbeitsmedium zum Verdampfer durch Kapillarkräfte kommen beispielsweise poröse Materialien in Frage, die elektrisch isolierend sind. Netzartig strukturierte und/oder gewebeartige Materialien sind ebenfalls geeignet. Vorzugsweise sind solche Mittel an der Innenfläche des Wärmerohrs vorgesehen.

In einer vorteilhaften Ausführungsform ist der Verdampfer in den Innenleiter integriert. Beispielsweise kann der Innenleiter derart gestaltet sein, dass er ein oder mehrere Volumina beinhaltet, welche einen Teil des Wärmerohrs darstellen und ganz oder teilweise mit Arbeitsmedium gefüllt sind. Dadurch ist eine sehr gute thermische Kopplung zwischen Wärmerohr und Innenleiter gegeben.

In einer weiteren vorteilhaften Ausführungsform weist der Hochleistungsschalter zum Stützen des Innenleiters einen Stützisolator auf, und ein Abschnitt des Wärmerohres verläuft innerhalb des Stützisolators. Ein Teil des Wärmerohrs ist in den Stützisolator integriert oder zumindest in dem Stützisolator angeordnet. Ein Vorteil dieser Ausführungsform ist, dass dadurch die Symmetrie der Anordnung von Innenleiter und Aussenleiter nicht oder kaum durch das Wärmerohr gestört wird. Der Stützisolator ist vorteilhaft eine elektrisch isolierende mechanische Verbindung zwischen Innenleiter und Aussenleiter.

In einem Aspekt der Erfindung enthält das Wärmerohr zur Erreichung einer grösseren Durchschlagsfestigkeit (über der Isolationsstrecke) zusätzlich zu dem Arbeitsmedium noch ein Hilfsgas.

Das Wärmerohr ist mit Vorteil derart ausgelegt, dass in einem am Verdampfer zu messenden Temperaturbereich von Tₘᵢₙ bis Tₘₐₓ dauerhaft über der Isolationsstrecke eine elektrische Hochspannung von bis zu HVₘₐₓ anliegen kann, ohne dass es im Bereich der Isolationsstrecke zu Durchschlägen käme. Das Wärmerohr beinhaltet einen Partialdruck eines von dem Arbeitsmedium verschiedenen Hilfsgases, wobei durch das Vorsehen des Hilfsgases erreicht wird, dass es beim Anliegen der Hochspannung HVₘₐₓ über der Isolationsstrecke bei der Temperatur Tₘᵢₙ nicht zu Durchschlägen im Bereich der Isolationsstrecke kommt, wohingegen es im Falle des Nichtvorhandenseins des Hilfsgases beim Anliegen der Hochspannung HVₘₐₓ über der Isolationsstrecke bei der Temperatur Tₘᵢₙ zu Durchschlägen im Bereich der Isolationsstrecke käme.

In einer anderen Sichtweise kann die Erfindung auch in der Schaffung eines solchen Wärmerohrs mit einem Hilfsgas gesehen werden, wobei dieses Wärmerohr auch unabhängig von einem Hochleistungsschalter und für beliebige andere Kühlzwecke eingesetzt werden kann. Beispielsweise kann es in irgendeinem Hochspannungsgerät eingesetzt werden, wie zum Beispiel in einem Transformator oder in einer Hochspannungsanlage.

Die Durchschlagsfestigkeit von Gasen als Funktion des Druckes des Gases hat im allgemeinen ein Minimum, was sich beispielsweise auch in der sogenannten Paschenkurve als ein Minimum der Durchschlagsspannung manifestiert. In dem für Hochleistungsschalter besonders interessanten Temperaturbereich zwischen etwa -40° C und etwa +60° C ist die Durchschlagsfestigkeit für typische Arbeitsmedien und typische Arbeitsgas-Drücke (100 mbar bis 1000 mbar während des Kühlbetriebes) für die tieferen Temperaturen (etwa -50° C bis -10° C) recht gering, so dass eine relativ lange Isolierstrecke von beispielsweise 50 cm oder mehr benötigt würde. Eine kürzere Isolierstrecke wäre zugunsten kleiner Abmessungen des Wärmerohrs wünschenswert.

Durch das Hilfsgas, das beispielsweise mit einem Partialdruck der Grössenordnung 100 mbar bis 500 mbar in dem Wärmerohr vorliegt, kann auch bei niedrigen Temperaturen noch ein Mindestdruck und damit eine entsprechende dielektrische Festigkeit in dem Wärmerohr sichergestellt werden. Die Arbeitsflüssigkeit beginnt erst bei derjenigen Temperatur zu sieden, bei der ihr Dampfdruck den Hilfsgasdruck übersteigt.

Im Zusammenhang mit der Paschenkurve entspricht dies einer Verschiebung der Kurve und somit des Durchschlagsspannungsminimums (auch) nach links, also zu kleinen Werten von (Gesamt-)Druck mal Isolierstreckenlänge. Bei konstanter Isolierstreckenlänge kann der Hochleistungsschalter also durch das Vorsehen des (nichtverschwindenden) Partialdruckes an Hilfsgas entweder, bei gleichem Temperaturbereich Tₘᵢₙ bis Tₘₐₓ des Hochleistungsschalters, mit höheren Spannungen beaufschlagt werden oder, bei einer Auslegung des Hochleistungsschalter für die gleichen Hochspannungen, für einen grösseren Temperaturbereich (mit kleinerem Tₘᵢₙ) eingesetzt werden. Oder, bei gleichem Temperaturbereich und gleichen Spannungen, kann eine kürzere Isolierstreckenlänge vorgesehen werden.

Das Hilfsgas ist vorteilhaft über den gesamten Temperaturbereich Tₘᵢₙ bis Tₘₐₓ gasförmig. Das Hilfsgas kann somit nur sehr wenig Wärme abführen, und es wird durch das verdampfende Arbeitsmedium in Richtung Kondensator bewegt. Darum ist am Kondensator ein Hilfsgas-Auffangvolumen vorgesehen sein, welches unter Betriebsbedingungen im wesentlichen mit einem Grossteil des Hilfsgases oder dem ganzen Hilfsgas gefüllt ist. Dadurch kann verhindert werden, dass die dem Arbeitsmedium zur Kondensation zur Verfügung stehende Fläche nicht oder nur geringfügig durch das Hilfsgas blockiert ist. Es wird eine effiziente Kühlung erreicht. Das Hilfsgas-Auffangvolumen kann starr ausgebildet sein (konstanter Volumeninhalt). In dem Aspekt der Erfindung ist der Volumeninhalt des Hilfsgas-Auffangvolumens variabel und wächst mit der Temperatur und dem Innendruck des Wärmerohrs. Ein solches Hilfsgas-Auffangvolumen ist vorteilhaft verformbar ausgebildet (zum Beispiel als ein Balg) und beispielsweise aus einem verformbaren Material.

Vorteilhaft ist der Partialdruck des Hilfsgases so gewählt, das unter Betriebsbedingungen (typischerweise bei Tₘₐₓ) der (Gesamt-)Innendruck des Wärmerohres dem das Wärmerohr umgebenden Aussendruck (knapp) entspricht, also typischerweise etwa 1 bar beträgt (1000 mbar plusminus 100 mbar bis 250 mbar) oder vorteilhaft knapp 1 bar. Es ist auch möglich, kleinere oder, vorteilhaft, grössere Drücke innerhalb des Wärmerohres vorzusehen. Mehrere bar oder auch mehrere zehn bar, beispielsweise mit Ammoniak als Arbeitsmedium, können beispielsweise den notwendigen konstruktiven Aufwand (Druckdichtigkeit) dadurch wettmachen, dass eine kürzere Isolationsstrecke vorgesehen werden kann.

Vorteilhaft kann der Innenleiter mehrere Abschnitte aufweisen, die jeweils mit mindestens einem Wärmerohr versehen sind. Besonders bei sehr langen Schaltern mit langen Innenleitern ist dadurch, dass entlang der Längserstreckung des Innenleiters mehreren in Längsrichtung hintereinander angeordneten Abschnitten des Hochleistungsschalters je mindestens ein Wärmerohr zugeordnet ist, eine sehr effiziente Kühlung möglich.

Vorteilhaft weist ein erfindungsgemässer Hochleistungsschalter mehrere Schalterpole mit je einem Innenleiter und je einem Aussenleiter und je mindestens einem Wärmerohr auf.

In einer bevorzugten Ausführungsform ist der Hochleistungsschalter ein Generatorschalter.

Das erfindungsgemässe Verfahren zum Kühlen eines länglich erstreckten und von einem Aussenleiter gehäuseartig umgebenen Innenleiters eines Hochleistungsschalters ist dadurch gekennzeichnet, dass ein Arbeitsmedium durch Aufnahme von Wärmeenergie (im allgemeinen vor allem Verlustwärme) des Innenleiters verdampft wird und unter Abgabe von Wärme kondensiert wird, wobei das Verdampfen und die Kondensation auf verschiedenen elektrischen Potentialen stattfinden.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen schematisch:
- Fig. 1: einen dreipoligen Generatorschalter, wobei drei verschiedene Arten der Anordnung des Wärmerohres dargestellt sind, geschnitten;
- Fig. 2: einen Hochleistungsschalter oder Schalterpol, mit einem mehrere Abschnitte aufweisenden Innenleiter und mehreren Wärmerohren, vorwiegend geschnitten, in Aufsicht;
- Fig. 3: Wärmerohr mit flexibel verformbaren Abschnitt, Hilfsgas und Hilfsgas-Auffangvolumen;
- Fig. 4: Paschenkurven für Arbeitsmedium mit und ohne Hilfsgas;
- Fig. 5: eine mögliche Ausgestaltung eines Isolationshohlkörpers (Ausschnitt), geschnitten.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Für das Verständnis der Erfindung nicht wesentliche Teile sind zum Teil nicht dargestellt. Die beschriebenen Ausführungsbeispiele stehen beispielhaft für den Erfindungsgegenstand und haben keine beschränkende Wirkung.

### Wege zur Ausführung der Erfindung

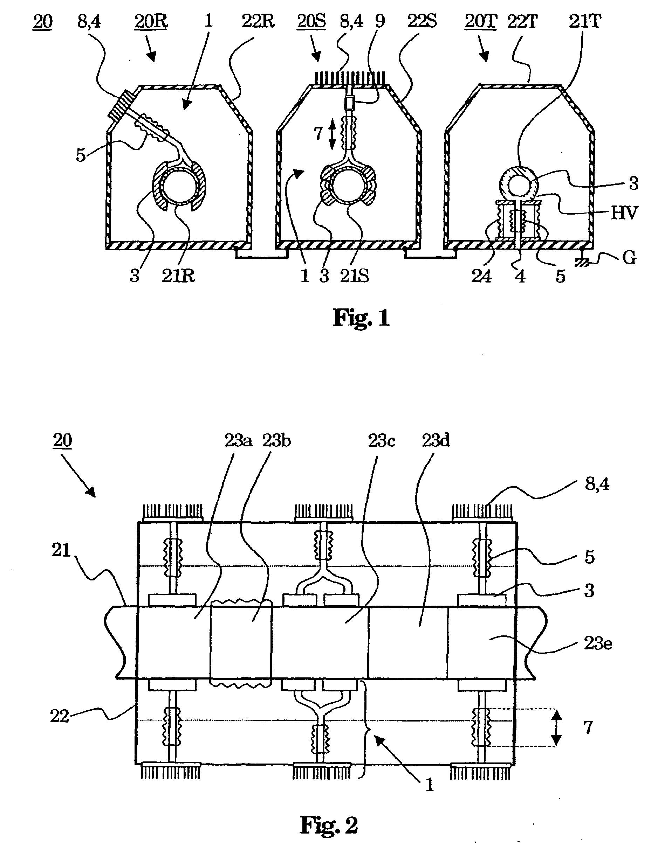

Fig. 1 zeigt schematisch im Schnitt einen dreipoligen Generatorschalter. Jeder der Schalterpole 20R,20S,20T weist einen rohrförmigen Innenleiter 21 R,215,21 T auf, welcher von je einem gehäuseartigen Aussenleiter 22R,22S,22T umgeben ist. Im Betriebsfalle liegt zwischen dem Innenleiter und dem jeweiligen Aussenleiter eine Hochspannung HV an, wobei der Aussenleiter auf Erdpotential G liegt und den Rückstrom führt. Im allgemeinen sind die drei Pole, anders als in Fig. 1 dargestellt, in einem gemeinsamen Sternpunkt geerdet. Da der Innenleiter gehäust ist und im allgemeinen einen kleineren Querschnitt als der Aussenleiter aufweist, entsteht am Innenleiter eine abzuführende Verlustwärme, während der Aussenleiter, der der Umgebungsluft ausgesetzt ist, sich relativ wenig erwärmt.

Zur Abführung der Verlustwärme der Innenleiters wird jeder der Innenleiter 21 R,21S,21T mittels (mindestens) eines Wärmerohrs 1 gekühlt. Typischerweise wird jeder Pol eines Hochleistungsschalters mittels eines ähnlich angeordneten und ausgebildeten Wärmerohres 1 gekühlt; in Fig. 1 ist allerdings in jedem Pol eine andere Wärmerohranordnung dargestellt. Jedes Wärmerohr 1 enthält ein Arbeitsmedium, das in einem als Verdampfer 3 bezeichneten Abschnitt des Wärmerohres 1 verdampft wird und in einem als Kondensator 4 bezeichneten Abschnitt des Wärmerohres 1 kondensiert wird.

### R-Pol (links in Fig. 1):

Der Verdampfer 3 weist zwei im wesentlichen hohlzylindersegmentförmige metallische Elemente (beispielsweise aus Aluminium) auf, deren Form an die Gestalt des Innenleiters 21 R angepasst ist, und die in gutem thermischen Kontakt mit dem Innenleiter 21 R an diesem befestigt sind. Diese Elemente sind als Hohlkörper ausgebildet und mit vorwiegend flüssigem Arbeitsmedium gefüllt. Die Hohlkörper sind durch zum Wärmerohr 1 gehörende vorzugsweise metallische Rohre miteinander verbunden.

Im weiteren Verlauf des Wärmerohres weist dieses einen Isolationshohlkörper 5 auf, welcher der elektrischen Isolation zwischen Verdampfer 3 und Kondensator 4 dient. Der Isolationshohlkörper 5 kann beispielsweise ein Glasrohr (beispielsweise aus Borosilikatglas, mit angrenzendem Kovar) oder ein Keramikrohr (beispielsweise aus Al₂O₃) sein, das gasdicht mit den weiteren Teilen des Wärmerohres verbunden ist. Wie in Fig. 1 schematisch dargestellt kann der Isolationshohlkörper 5 eine Beschirmung, beispielsweise aus Silikon oder Keramik, aufweisen. Durch den Isolationshohlkörper 5 wird eine Isolationsstrecke 7 (siehe beim S-Pol, Fig. 1 mitte) gebildet. Diese muss einer am Schalter dauerhaft anliegenden Nennspannung (typischerweise etwa 10 kV bis 40 kV) und auch einer kurzzeitig am Schalter anliegenden Kurzschlusspannung oder Blitzstosspannung (typischerweise 100 kV oder mehrere 100 KV) standhalten können.

Ein weiteres, vorzugsweise metallisches Rohrstück verbindet den Isolationshohlkörper 5 mit dem Kondensator 4. Die Reihenfolge der Anordnung von diesem metallischen Rohrstück und dem Isolationshohlkörper 5 zwischen Verdampfer 3 und Kondensator 4 kann auch umgekehrt sein. Die Verbindungen zwischen dem Isolationshohlkörper 5 und angrenzenden Teilen des Wärmerohres 1 können beispielsweise mittels Verbindungstechniken (Löten) erstellt werden, wie sie aus der Herstellung von Vakuum-Schaltkammer bekannt sind. Ein solcher Übergang kann auch durch Dichtungen und Flansche realisiert werden. Um Feldspitzen in der Nähe eines solchen Überganges zu vermeiden, kann nahe einem solchen Übergang eine Schirmelektrode vorgesehen werden.

Der Kondensator 4 weist eine vorzugsweise metallische Kühlrippenanordnung 8 auf, welche auf einer Dachschräge des Aussenleiters 21 R befestigt ist und vorteilhaft ein Röhrensystem aufweist (nicht dargestellt), in welchem sich das gasförmige Arbeitsmedium ausbreiten kann, um dann darin zu kondensieren und wieder zum Verdampfer 3 zurückzufliessen. Mit Vorteil sind Teile eines solchen Röhrensystems in zumindest einem Teil der Kühlrippen angeordnet.

Die Kühlrippenanordnung 8 ist in thermischem Kontakt mit dem Aussenleiter 22R und der Umgebungsluft, so dass ein effizientes Abführen der Wärme möglich ist. Auf eine Kühlrippenanordnung 8 könnte auch verzichtet werden; ebenso könnte auch auf einen thermischen Kontakt des Kondensators 4 mit dem Aussenleiter 22R und/oder auf eine Befestigung des Kondensators 4 an dem Aussenleiter verzichtet werden. Es ist vorteilhaft, wenn zumindest ein Teil des Kondensators ausserhalb des Aussenleiters 22R angeordnet ist. Alternativ zur Kühlrippenanordnung 8 können auch andere Vorrichtungen zur Wärmeabgabe 8, beispielsweise Wärmetauscher, eingesetzt werden. Auch eine forcierte Kühlung ist hier denkbar, beispielsweise mittels Ventilatoren.

### S-Pol (mitte in Fig. 1):

Der Verdampfer 3 weist zwei mal zwei im wesentlichen hohlzylindersegmentförmige metallische Elemente auf, deren Form an die Gestalt des Innenleiters 21S angepasst ist, und die in gutem thermischen Kontakt mit dem Innenleiter 21 S an diesem befestigt sind. Diese Elemente sind mit vorwiegend flüssigem Arbeitsmedium gefüllt und durch zum Wärmerohr 1 gehörende vorzugsweise metallische Rohre miteinander verbunden. An dem Aussenleiter 22S können ebene flächige Abschnitte vorgesehen sein, an welchen die Elemente mit dem Innenleiter 21S in Kontakt gebracht werden, beispielsweise durch Schrauben.

Es ist noch schematisch ein flexibel verformbarer Abschnitt 9 des Wärmerohrs 1 dargestellt, welcher beispielsweise durch einen Balg 9 gebildet wird. Mechanische Erschütterungen, wie sie beispielsweise beim Ein- oder Ausschalten des Schalters auftreten, können dadurch in ihrem Einfluss auf das Wärmerohr 1 vermindert werden. Die mechanische Belastung des Wärmerohres 1 und insbesondere der Übergangsstellen zwischen dem Isolationshohlkörper 5 und weiteren Teilen des Wärmerohres 1, kann auf diese Weise stark verringert werden, was der Dichtigkeit und der Standzeit des Wärmerohres 1 zuträglich ist. Metall-Glas- und Metall-Keramik-Übergänge sind besonders empfindlich gegenüber mechanischen Belastungen.

Der Kondensator 4 ist im Falle des S-Pols 20S auf dem Dach (Deckel) des Aussenleiters 22S angebracht. Ein solcher Teil des Aussenleiters ist im allgemeinen bewegbar / abnehmbar / schwenkbar ausgeführt, um das Innere des Schalterpols zugänglich zu machen, so dass vorteilhaft das Wärmerohr derart ausgeführt ist, dass eine entsprechende Bewegung von Kondensator gegenüber Verdampfer möglich ist, beispielsweise durch mindestens ein flexibles Verbindungselement. Es ist beispielsweise auch möglich, dass das Wärmerohr eine (nicht bewegliche) Wand des Aussenleiters durchdringt und dennoch auf einem beweglichen Teil des Aussenleiters angeordnet ist (beispielsweise auf einem vorteilhaft schwenkbaren Dach), wobei dann vorteilhaft ein flexibles Verbindungselement des Wärmerohres das Öffnen des Aussenleiters durch Bewegen des beweglichen Teiles ohne Öffnen des Wärmerohres ermöglicht.

Im allgemeinen wird der Kondensator 4 aber bevorzugt an einer solchen Stelle den Aussenleiter durchdringen und/oder mit diesem in Kontakt sein, die im Falle von Montage- oder Service-Arbeiten nicht gegenüber dem Innenleiter bewegt wird.

Statt der in Fig. 1 links und mitte dargestellten 2 und 4 Elemente kann ein Wärmerohr 1 auch 1,3,5,6,7,8 oder mehr Elemente aufweisen, die Wärme des Innenleiters 21 aufnehmen.

### T-Pol (Fig. 1 rechts):

Beim T-Pol ist der Verdampfer 5 in den Innenleiter 21 T integriert in Form von vorzugsweise röhrenförmigen Volumina, die innerhalb des Innenleiterquerschnittes vorgesehen sind. Dadurch ist eine sehr gute thermische Kopplung zwischen Innenleiter 21 T und Verdampfer 3 gegeben. Während beim R- und beim S-Pol der Kondensator 4 stets oberhalb des Verdampfers 3 angeordnet ist, so dass das entsprechende Wärmerohr 1 als Thermosiphon ausgebildet ist, ist beim T-Pol der Fall dargestellt, dass der Kondensator 4 unterhalb des Verdampfers 3 angeordnet ist. In diesem Falle ist ein Mittel zur Rückführung von kondensiertem Arbeitsmedium zum Verdampfer vorzusehen. Dieses kann vorzugsweise mittels Kapillarkräften arbeiten. Zumindest im Bereich der Isolationsstrecke 7 muss das Mittel zur Rückführung von kondensiertem Arbeitsmedium zum Verdampfer elektrisch isolierend sein.

Ein Abschnitt des Wärmerohrs 1 verläuft innerhalb eines Stützisolators 24, welcher den Innenleiter 21 T stützt. Dies ermöglicht es, die Symmetrie der Innenleiter- Aussenleiter-Anordnung trotz Einbau eines Wärmerohres 1 unbeeinflusst zu lassen. Der Kondensator 4 ist in oder an einem Bodenteil des Aussenleiters 22T vorgesehen.

Fig. 2 zeigt schematisch eine teilweise geschnittene Aufsicht auf einen Schalter oder Schalterpol 20, der ähnlich dem R-Pol aus Fig. 1 (links) aufgebaut ist. Der Innenleiter 21 weist mehrere Abschnitte 23a bis 23e auf, von denen mehrere (drei) mit im wesentlichen symmetrisch angeordnetetn zwei Wärmerohren 1 versehen sind.

Der Abschnitt 23a ist ein Anschlussgehäuse 23a, welches dem Anschluss des Schalters 20 an die Generatorableitung dient. Das Anschlussgehäuse 23a ist mittels zweier Wärmerohre 1 gekühlt, die Kühlrippen 8 auf je einer Seitenwand des Aussenleiters 22 aufweisen. Der Abschnitt 23b ist eine Löschkammer, die der Kontakttrennung und Lichtbogenlöschung dient. Daran schliesst das Antriebsgehäuse 23c an, in welchem ein Antrieb zur Ermöglichung der Kontakttrennung in der Löschkammer 23b angeordnet ist. Das Antriebsgehäuse 23c ist durch zwei Wärmerohre 1 gekühlt, welche je zwei am Antriebsgehäuse 23c befestigte und mit diesem in gutem thermischen Kontakt stehende Elemente (Hohlkörper) aufweist.

Anschliessend an das Antriebsgehäuse 23c ist ein bewegliches Trennerrohr 23d vorgesehen, das der Erzeugung einer sichtbaren Trennstrecke dient. Daran anschliessend ist ein Trennergehäuse 23d vorgesehen, das der Aufnahme des Trennerrohres dient. Das Trennergehäuse 23e ist in gleicher Weise gekühlt wie das Anschlussgehäuse 23a.

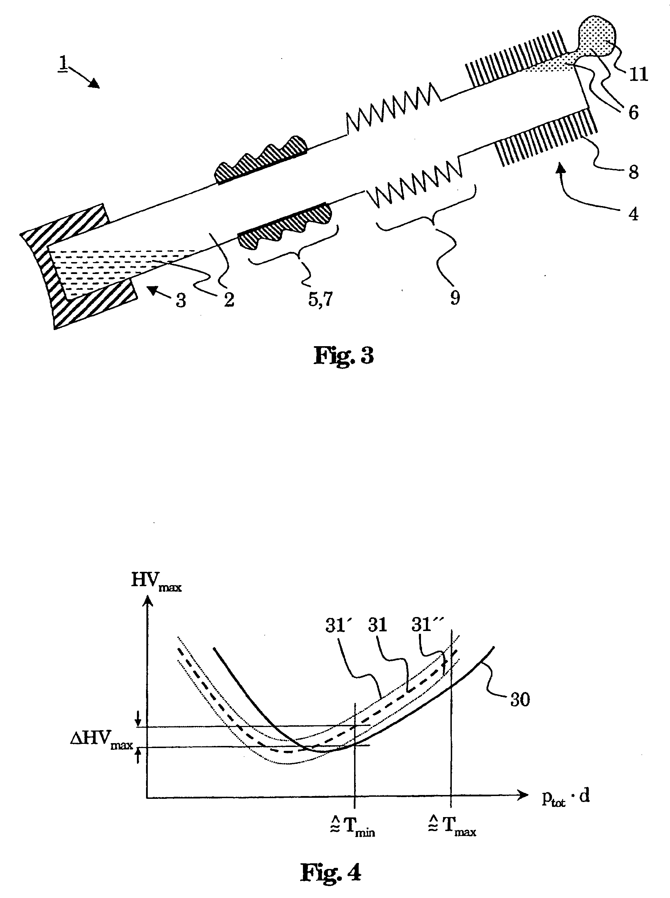

In Fig. 4 ist schematisch ein Wärmerohr 1 dargestellt. Es ist hermetisch geschlossen, so dass ein geschlossener Kreislauf innerhalb des Wärmerohres vorliegt und keine Wartung notwendig ist. Der Verdampfer 3 beinhaltet ein Element, das der thermischen Ankopplung an einen zu kühlenden Körper (beispielsweise einen Schalter-Innenleiter) dient. Der der Überbrückung einer elektrischen Potentialdifferenz dienende und eine Isolationsstrecke 7 bildende Isolationshohlkörper 5 ist, wie dargestellt, vorteilhaft mit einer Beschirmung versehen.

Weiter weist das in Fig. 3 dargestellte Wärmerohr 1 einen durch einen Balg gebildeten flexiblen Bereich 9 auf. Dadurch sind die zu den beiden Seiten des Bereichs 9 erstreckten Teile des Wärmerohres 1 relativ zueinander bewegbar, so dass allzugrosse mechanische Spannungen, wie sie beispielsweise bei Erschütterungen auftreten können, abgefangen werden und nicht zu Undichtigkeiten des Wärmerohr 1 führen. Der flexibel verformbarer Abschnitt 9 des Wärmerohrs 1 kann beispielsweise auch durch einen Hohlkörper aus elastischem Material gebildet werden. Der Kondensator 4 des Wärmerohrs aus Fig. 3 ist mit Kühlrippen 8 versehen. Die Reihenfolge der Anordnung von dem flexibel verformbarer Abschnitt 9 und dem Isolationshohlkörper 5 zwischen Verdampfer 3 und Kondensator 4 kann auch umgekehrt sein.

Im Bereich des Kondensators 4 ist ein Auffangvolumen 11 vorgesehen, dessen Volumen vorteilhaft bei Druckänderungen im Innern des Wärmerohrs 1 veränderlich ist. Ausser dem Arbeitsmedium 2 ist in dem Wärmerohr noch ein Hilfsgas 6 vorhanden. Das Hilfsgas 6 sollte über den ganzen für das Wärmerohr 1 vorgesehenen Temperaturbereich gasförmig sein. Die Vorteile eines solchen Hilfsgases 6 werden weiter unten in Verbindung mir Fig. 4 erläutert.

Da das Hilfsgas nur sehr geringfügig zur Kühlung beizutragen vermag und durch das (während eines Kühlvorganges) ständig verdampfende Arbeitsgas 2 in Richtung Kondensator 4 getrieben wird, kann das Hilfsgas 6 die zur Kondensation des Arbeitsgases 2 nutzbare Fläche im Kondensator 4 blockieren, so dass die Kühlleistung des Wärmerohres 1 vermindert wird. Wenn, wie in Fig. 3 dargestellt, eine Vorrichtung 8 zur Wärmeabgabe vorhanden ist, sollte diese auch möglichst grossflächig in möglichst gutem thermischen Kontakt mit dem Arbeitsgas 2 sein können. Darum ist das Auffangvolumen 11 zur Aufnahme von Hilfsgas 6 vorgesehen. Im optimalen Falle sollte während typischer Kühlvorgänge (typische abzuführende Wärmeleistungen) das Auffangvolumen 11 das gesamte Hilfsgas 6 und praktisch kein Arbeitsgas enthalten. Auf diese Weise steht dem Arbeitsgas 2 stets die ganze mit Kühlrippen 8 versehene Innenfläche des Wärmerohres 1 zur Kondensation zur Verfügung, und eine Kondensation von Arbeitsgas 2 innerhalb des Auffangvolumens 11 findet nicht oder kaum statt.

Der Zweck des Hilfsgases 6 lässt sich anhand von Fig. 4 erläutern. Die fette durchgezogene Kurve 30 in Fig. 4 stellt schematisch eine Paschenkurve für den Fall dar, dass nur Arbeitsgas 2 und kein Hilfsgas 6 in dem Wärmerohr 1 vorhanden ist. Auf der x-Achse ist pₜₒₜ·d aufgetragen, wobei pₜₒₜ der Gesamtdruck innerhalb des Wärmerohres 1 ist, und d die Isolierstreckenlänge (Abstand zwischen zwei auf verschiedenen elektrischen Potentialen befindlichen Körpern; hier: im wesentlichen die Länge des Isolationshohlkörpers 5). Auf der y-Achse ist HVₘₐₓ aufgetragen, wobei HVₘₐₓ diejenige Hochspannung ist, bei der es bei dem entsprechenden pₜₒₜ·d-Wert zu einem elektrischen Durchschlag in dem entsprechenden Gasgemisch bei dem entsprechenden Druck und bei der entsprechenden Isolierstreckenlänge, über die HVₘₐₓ anliegt, kommt. Die Paschenkurve hat ein Minimum, bei welchem die Durchschlagsfestigkeit des Gasgemisches (hier: Arbeitsgas 2) besonders gering ist.

Bezieht man die Paschenkurve auf das Wärmerohr 1, so ist die Isolierstreckenlänge d konstant, und soweit kein Auffangvolumen 11 vorhanden ist oder dessen Volumeninhalt im wesentlichen konstant ist, ist der Druck durch eine stetige Funktion mit der Temperatur des gasförmigen Arbeitsmediums 2 nahe dem Verdampfer 3 verbunden (der Dampfdruck des Arbeitsmediums steigt mit steigender Temperatur). Darum können ungefähr bestimmten pₜₒₜ·d-Werten entsprechende Temperaturen Tₘᵢₙ und Tₘₐₓ auf der x-Achse eingetragen werden, welche die minimale und die maximale Arbeitstemperatur des Wärmerohres 1 angeben, entsprechend der minimalen und maximalen Gastemperatur des Arbeitsmediums 2 nahe dem Verdampfer 3. Der Arbeitstemperaturbereich, für den ein Wärmerohr 1 zu konstruieren ist, kann dadurch vorgegeben sein, dass in der anvisierten Anwendung dieser Temperaturbereich vorgegeben ist. Beispielsweise bei einer Anwendung in einem typischen Hochleistungsschalter, beispielsweise Generatorschalter, ist ein Bereich mit Tₘᵢₙ = -40° C und Tₘₐₓ = +60° C oder Tₘᵢₙ = -25° C und Tₘₐₓ = +60° C möglich.

Für typische Arbeitsmedien liegt der Temperaturbereich rechts von dem Paschenkurvenminimum, wobei Tₘᵢₙ relativ nahe bei dem Minimum liegt. Somit ergibt sich, wie in Fig. 4 auch dargestellt, ein relativ kleiner HVₘₐₓ₋Wert. Das heisst, dass entweder nur kleine Spannungen HV über der Isolationsstrecke anliegen dürfen oder die Länge der Isolierstrecke gross gewählt werden muss. Der Gasdruck des Arbeitsmediums 2 in dem geschlossenen System des Wärmerohres 1 stellt sich allein durch die Temperatur ein. In Schalteranwendungen ist die Spannung HV, die ohne Durchschläge über der Isolationsstrecke 7 abfallen darf, im allgemeinen vorgegeben, und die Isolierstreckenlänge d ist vorteilhaft relativ klein, insbesondere, wenn der Abstand zwischen Innenleiter und Aussenleiter klein ist. Eine kleine Isolierstreckenlänge d hat die Vorteile, dass die Baugrösse des Wärmerohres kleiner ist und dass ein entsprechend kurzer Isolierhohlkörper im allgemeinen bessere mechanische Eigenschaften aufweist.

Die erfinderische Möglichkeit, dennoch eine verbesserte Durchschlagsfestigkeit des Wärmerohres 1 zu erlangen, besteht darin, ausser dem Arbeitsmedium 2 auch noch ein von dem Arbeitsmedium 2 verschiedenes Hilfsgas 6 in dem Wärmerohr 1 vorzusehen. Dadurch kann bei kleinen Temperaturen und entsprechend kleinen Drücken des Arbeitsmediums 2 ein gewisser Mindestdruck und somit eine vorgebbare minimale Durchschlagsfestigkeit vorgegeben werden. In der Paschenkurven-Darstellung stellt sich dies in erster Näherung als eine Links-Verschiebung der Paschenkurve 30 dar, so dass die neue, gestrichelte fette Paschenkurve 31 gilt. Je nachdem, welches Arbeitsmedium 2 und welches Gas als Hilfsgas 6 verwendet wird, hat die neue Paschenkurve eine etwas andere Form und is etwas nach oben oder nach unten verschoben (siehe beispielhaft Paschenkurven 31' und 31'' in Fig. 4).

Fig. 4 ist zu entnehmen, dass wenn die Kurve 31 die relevante Kurve für das Arbeitsmedium-Hilfsgas-Gemisch ist, bei Tₘᵢₙ durch die Hinzufügung des Hilfsgases 6 eine um ΔHVₘₐₓ deutlich erhöhte Durchschlagsspannung erreicht wird. Durch das Hilfsgas 6 kann also eine Verkürzung der Isolierstrecke 7, eine Vergrösserung des Temperatur-Arbeitsbereiches und/oder eine Erhöhung der anlegbaren Spannung erreicht werden.

Geeignete Arbeitsmedien 2 sind beispielsweise Aceton, fluorierte Kohlenwasserstoffe wie zum Beispiel "FC-72" der Firma 3M, oder Hydro-Fluor-Ether wie beispielsweise "HFE-7100" der Firma 3M. Geeignete Hilfsgase 6 können beispielsweise SF₆ oder Luft oder Stickstoff oder ein Gasgemisch sein. Sowohl das Arbeitsmedium als auch das Hilfsgas müssen elektrisch isolierend sein und eine geeignete dielektrische Festigkeit aufweisen. Die elektrische Leitfähigkeit des Arbeitsmediums 2 sollte typischerweise kleiner als 1·10⁻⁶(Ω·cm)⁻¹ oder zumindest kleiner als 5·10⁻⁶(Ω·cm)⁻¹ sein.

Typische Hilfsgas-Drücke liegen bei 100 mbar bis 400 mbar. Typische Isolierstreckenlängen 7 betragen etwa 50 mm bis 400 mm. Die mittels eines Wärmerohres 1 abgeführte Wärmeleistung beträgt typischerweise zwischen 0.5 kW und 1.5 kW.

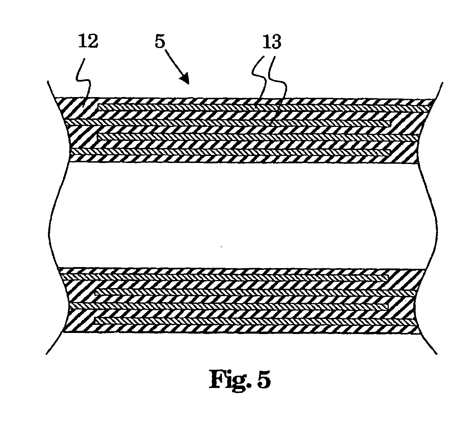

Fig. 5 zeigt schematisch im Schnitt einen Ausschnitt aus einer weiteren erfindungsgemässen Ausführung eines Isolationshohlkörpers 5. Dieser Isolationshohlkörper 5 ist ein rohrförmiges Stück Isoliermaterials 12, beispielsweise eines glasfaserverstärkten Kunststoffes, welches als Trägermaterial 12 dient und in welches Diffusionsinhibitoren 13 eingebracht sind. Das Trägerrohr 12 ist elektrisch isolierend und weist eine gewisse mechanische Flexibilität auf. Insofern kann ein solcher, auf der Basis eines flexiblen Materials gefertigter Isolationshohlkörper auch die Funktion des flexiblen Abschnittes 9 des Wärmerohres 1 übernehmen, so dass kein separater solcher Abschnitt 9 vorgesehen werden muss.

Diffusionsinhibitoren 13 sind bei derartigen Materialien 12 zumeist nötig oder zumindest vorteilhaft, da typische Arbeitsmedien 2 und Hilfsgase 6 durch sie hindurchdiffundieren könnten und/oder Luft und/oder Wasserdampf in das Wärmerohr hineindiffundieren könnten, so dass die Wärmetransporteigenschaften des Wärmerohres sich mit der Zeit änderten. Die Diffusionsinhibitoren 13 behindern das Herausdiffundieren von Molekülen aus dem Wärmerohr (Diffusionsbarriere; Blockierung der Diffusion). Vorteilhaft können Metallschichten 13 oder Metallfolien 13 als Diffusionsinhibitoren 13 eingesetzt werden, welche vorteilhaft rohrförmig sind. Polymere, zum Beispiel in Form von Filmen, sind ebenfalls als Diffusionsinhibitoren 13 denkbar. Mit grossem Vorteil werden mindestens zwei oder drei, vier, fünf, sechs oder mehr solcher Diffusionsinhibitoren 13 in das Trägerrohr 12 eingebracht, und zwar derart, dass durch sie sehr lange Diffusionswege für Moleküle geschaffen werden, die durch den Isolationshohlkörper 5 vom Inneren des Wärmerohres 1 nach aussen zu diffundieren versuchen. Beispielsweise können, wie in Fig. 5 dargestellt, einander weit überlappende rohrförmige Diffusionsinhibitoren 13 leicht verschiedener Durchmesser verwendet werden. Sofern die Diffusionsinhibitoren 13 elektrisch leitfähig sind, ist ein Mindestabstand zwischen Diffusionsinhibitoren 13, die sich auf verschiedenen elektrischen Potentialen befinden, einzuhalten, damit eine geeignete Durchschlagsfestigkeit erreicht wird. Gegebenenfalls ist auch noch der Abstand von Diffusionsinhibitoren zu den Enden der Isolationsstrecke zu beachten. Nach Art eines elektrischen Kondensators können beispielsweise das innerste Diffusionsinhibitor-Rohr 13 und das äusserste Diffusionsinhibitor-Rohr 13 mit der Hochspannung HV beziehungsweise mit Erdpotential G verbunden sein, während dazwischenliegende Diffusionsinhibitor-Rohre 13 als Spannungsteiler wirken, so dass zwischen zwei benachbarten Diffusionsinhibitor-Rohren 13 nur ein Bruchteil der Hochspannung HV abfällt. Alternativ können beispielsweise aber auch jeweils benachbarte Diffusionsinhibitor-Rohre 13 auf jeweils Erdpotential beziehungsweise dem am Wärmerohr anliegenden Hochspannungspotential liegen.

Ein Wärmerohr kann auch mehrere miteinander verbundene, beispielsweise zwei schlaufenartig miteinander verbundene Hohlteile aufweisen. Beispielsweise kann in einem Hohlteil das verdampfte Arbeitsmedium zum Kondensator strömen, während in einem anderen Hohlteil das kondensierte Arbeitsmedium zum Verdampfer zurückfliesst. Im Falle eines solchen Wärmerohres wären dann allerdings mehrere Isolierhohlkörper vorzusehen.

### Bezugszeichenliste

- 1: Wärmerohr
- 2: Arbeitsmedium
- 3: Verdampfer
- 4: Kondensator
- 5: Isolationshohlkörper, Glasrohr, Keramikrohr
- 6: Hilfsgas
- 7: Isolationsstrecke
- 8: Vorrichtung zur Wärmeabgabe, Wärmetauscher, Kühlrippenanordnung, Radiator
- 9: flexibel verformbarer Abschnitt des Wärmerohrs
- 10: Mittel zur Rückführung von kondensiertem Arbeitsmedium zum Verdampfer durch Kapillarkräfte
- 11: Auffangvolumen für Hilfsgas
- 12: Trägermaterial,Trägerrohr, glasfaserverstärkter Kunststoff
- 13: Diffusionsinhibitor, Metallfolie, Metallzylinder
- 20: Hochleistungsschalter, Schalterpol, Generatorschalter
- 20R,20S,20T: Schalterpol
- 21: Innenleiter, Rohrleiter
- 21R,21S,21T: Innenleiter
- 22: Aussenleiter, Kapselung, Gehäuse
- 22R,22S,22T: Aussenleiter
- 23: Abschnitt des Innenleiters
- 23a: Anschlussgehäuse
- 23b: Löschkammer
- 23c: Antriebsgehäuse
- 23d: bewegliches Trennerrohr
- 23e: Trennergehäuse
- 24: Stützisolator
- 30: Paschenkurve für Arbeitsmedium ohne Hilfsgas
- 31,31',31'': Paschenkurve für Arbeitsmedium mit Hilfsgas

- d: Isolierstreckenlänge, Abstand zwischen zwei auf verschiedenen elektrischen Potentialen befindlichen Körpern
- G: Erdpotential
- HV: Hochspannung
- HVₘₐₓ: Hochspannung
- p: Partialdruck des Hilfsgases
- Pₜₒₜ: Gesamtdruck
- Tₘᵢₙ: Temperatur
- Tₘₐₓ: Temperatur

## Patentansprüche

1. Generatorschalter (20) mit einem länglich erstreckten Innenleiter (21) und einem gehäuseartig den Innenleiter (21) umgebenden Aussenleiter (22), wobei
zum Abführen von Wärmeenergie des Innenleiters (21) mindestens ein Wärmerohr (1) vorgesehen ist, welches Wärmerohr (1) ein Arbeitsmedium (2) beinhaltet zum Abführen der Wärmeenergie durch Verdampfen des Arbeitsmediums (2) in einem als Verdampfer (3) bezeichneten Abschnitt des Wärmerohres (1) und Kondensieren des Arbeitsmediums (2) in einem als Kondensator (4) bezeichneten Abschnitt des Wärmerohres (1),
wobei sich das Wärmerohr (1) von dem Innenleiter (21) bis zu dem Aussenleiter (22) erstreckt und zur Bildung einer elektrischen Isolationsstrecke (7) einen Isolationshohlkörper (5) aufweist und der Verdampfer (3) in engem thermischen Kontakt mit dem Innenleiter (21) ist und der Kondensator (4) in engem thermischen Kontakt mit dem Aussenleiter (22) ist und dass das Wärmerohr (1) einen flexibel verformbaren Abschnitt (9) aufweist, der dazu dient, hohe mechanische Belastungen des Wärmerohrs (1) zu vermeiden, die durch Erschütterungen des Generatorschalters (20) bei Schaltvorgängen und dadurch bewirkte Relativbewegungen zwischen dem Innenleiter (21) und dem Aussenleiter (22) verursacht sind.

2. Der Generatorschalter (20) gemäss Anspruch 1, **dadurch gekennzeichnet, dass** der Kondensator eine Vorrichtung zur Wärmeabgabe (8) aufweist.

3. Der Generatorschalter (20) gemäss einem der vorangegangenen Ansprüche, **dadurch gekennzeichnet, dass** sich das Wärmerohr (1) bis ausserhalb des Aussenleiters (2) erstreckt.

4. Der Generatorschalter (20) gemäss einem der vorangegangenen Ansprüche, **dadurch gekennzeichnet, dass** das Wärmerohr (1) als ein Thermosiphon ausgestaltet ist.

5. Der Generatorschalter (20) gemäss einem der vorangegangenen Ansprüche, **dadurch gekennzeichnet, dass** das Wärmerohr (1) ein Mittel (10) zur Rückführung von kondensiertem Arbeitsmedium (2) zum Verdampfer (3) durch Kapillarkräfte beinhaltet.

6. Der Generatorschalter (20) gemäss einem der Ansprüche 2 bis 5, **dadurch gekennzeichnet, dass** der Verdampfer (3) in den Innenleiter (21) integriert ist.

7. Der Generatorschalter (20) gemäss einem der Ansprüche 2 bis 6, **dadurch gekennzeichnet, dass** er zum Stützen des Innenleiters (21) einen Stützisolator (24) aufweist, und dass ein Abschnitt des Wärmerohres (1) innerhalb des Stützisolators (24) verläuft.

8. Der Generatorschalter (20) gemäss einem der Ansprüche 2 bis 7, **dadurch gekennzeichnet, dass** das Wärmerohr (1) zur Erhöhung der Durchschlagsfestigkeit über der Isolationsstrecke (7) zusätzlich zu dem Arbeitsmedium (2) noch ein Hilfsgas (6) beinhaltet.

9. Der Generatorschalter (20) gemäss einem der Ansprüche 2 bis 7, **dadurch gekennzeichnet, dass** das Wärmerohr (1) derart ausgelegt ist, dass in einem am Verdampfer (3) zu messenden Temperaturbereich von Tₘᵢₙ bis Tₘₐₓ dauerhaft über der Isolationsstrecke (7) eine elektrische Hochspannung (HV) von bis zu HVₘₐₓ anliegen kann, ohne dass es im Bereich der Isolationsstrecke (7) zu Durchschlägen käme, **dadurch gekennzeichnet, dass** das Wärmerohr (1) einen Partialdruck (p) eines von dem Arbeitsmedium (2) verschiedenen Hilfsgases (6) beinhaltet, wobei durch das Vorsehen des Hilfsgases (6) erreicht wird, dass es beim Anliegen der Hochspannung HVₘₐₓ über der Isolationsstrecke (7) bei der Temperatur Tₘᵢₙ nicht zu Durchschlägen im Bereich der lsolationsstrecke (7) kommt, wohingegen es im Falle des Nichtvorhandenseins des Hilfsgases (6) beim Anliegen der Hochspannung HVₘₐₓ über der Isolationsstrecke (7) bei der Temperatur Tₘᵢₙ zu Durchschlägen im Bereich der Isolationsstrecke (7) käme.

10. Generatorschalter (20) gemäss einem der vorangegangenen Ansprüche, **dadurch gekennzeichnet, dass** der Innenleiter (21) mehrere Abschnitte (23) aufweist, die jeweils mit mindestens einem Wärmerohr (1) versehen sind.

11. Der Generatorschalter (20) gemäss einem der vorangegangenen Ansprüche, **dadurch gekennzeichnet, dass** er mehrere Schalterpole (20R, 20S, 20T) mit je einem Innenleiter (21 R, 21 S, 21T) und je einem Aussenleiter (22R, 22S, 22T) und je mindestens einem Wärmerohr (1) aufweist.

12. Verfahren zum Kühlen eines länglich erstreckten und von einem Aussenleiter (22) gehäuseartig umgebenen Innenleiters (21) eines Generatorschalters gemäß einem der Ansprüche 1 - 11, **dadurch gekennzeichnet, dass** ein Arbeitsmedium (2) durch Aufnahme von Wärmeenergie des Innenleiters (21) verdampft wird und unter Abgabe von Wärme an den Aussenleiter (22) oder an eine Kühlrippenanordnung, die am Aussenleiter (22) befestigt ist, kondensiert wird, wobei das Verdampfen und die Kondensation auf verschiedenen elektrischen Potentialen stattfinden.

13. Hochleistungsschalter (20) mit einem länglich erstreckten Innenleiter (21) und einem gehäuseartig den Innenleiter (21) umgebenden Aussenleiter (22), wobei
zum Abführen von Wärmeenergie des Innenleiters (21) mindestens ein Wärmerohr (1) vorgesehen ist, welches Wärmerohr (1) ein Arbeitsmedium (2) beinhaltet zum Abführen der Wärmeenergie durch Verdampfen des Arbeitsmediums (2) in einem als Verdampfer (3) bezeichneten Abschnitt des Wärmerohres (1) und Kondensieren des Arbeitsmediums (2) in einem als Kondensator (4) bezeichneten Abschnitt des Wärmerohres (1),
**dadurch gekennzeichnet, dass** sich das Wärmerohr von dem Innenleiter (21) bis zu dem Aussenleiter (22) erstreckt und zur Bildung einer elektrischen Isolationsstrecke (7) einen Isolationshohlkörper (5) aufweist und der Verdampfer (3) in engem thermischen Kontakt mit dem Innenleiter (21) ist und der Kondensator (4) in engem thermischen Kontakt mit dem Aussenleiter (22) ist und dass das Wärmerohr (1) einen flexibel verformbaren Abschnitt (9) aufweist, und
dass der Isolationshohlkörper (5) ein rohrförmiges Stück Isoliermaterials (12), insbesondere ein glasfaserverstärkter Kunststoff, ist, welches als Trägermaterial (12) dient und in welches Diffusionsinhibitoren (13) eingebracht sind.

14. Hochleistungsschalter (20) mit einem länglich erstreckten Innenleiter (21) und einem gehäuseartig den Innenleiter (21) umgebenden Aussenleiter (22), wobei
zum Abführen von Wärmeenergie des Innenleiters (21) mindestens ein Wärmerohr (1) vorgesehen ist, welches Wärmerohr (1) ein Arbeitsmedium (2) beinhaltet zum Abführen der Wärmeenergie durch Verdampfen des Arbeitsmediums (2) in einem als Verdampfer (3) bezeichneten Abschnitt des Wärmerohres (1) und Kondensieren des Arbeitsmediums (2) in einem als Kondensator (4) bezeichneten Abschnitt des Wärmerohres (1),
**dadurch gekennzeichnet, dass** sich das Wärmerohr von dem Innenleiter (21) bis zu dem Aussenleiter (22) erstreckt und zur Bildung einer elektrischen Isolationsstrecke (7) einen Isolationshohlkörper (5) aufweist und der Verdampfer (3) in engem thermischen Kontakt mit dem Innenleiter (21) ist und der Kondensator (4) in engem thermischen Kontakt mit dem Aussenleiter (22) ist und dass das Wärmerohr (1) einen flexibel verformbaren Abschnitt (9) aufweist,
dass das Wärmerohr zur Erreichung einer grösseren Durchschlagsfestigkeit über der Isolationsstrecke zusätzlich zu dem Arbeitsmedium noch ein Hilfsgas enthält, und
dass am Kondensator ein Hilfsgas-Auffangvolumen vorhanden ist, welches unter Betriebsbedingungen mit einem Grossteil des elektrisch isolierenden Hilfsgases oder dem ganzen elektrisch isolierenden Hilfsgas gefüllt ist und das Hilfsgas-Auffangvolumen variabel ist und mit der Temperatur und dem Innendruck des Wärmerohres (1) wächst.

## Claims

1. Generator circuit breaker (20) having an elongated inner conductor (21) and an outer conductor (22) which surrounds the inner conductor (21) like a housing,
at least one heat pipe (1) being provided in order to dissipate thermal energy from the inner conductor (21),
which heat pipe (1) contains a working medium (2) for dissipation of the thermal energy by vaporization of the working medium (2) in a section of the heat pipe (1) which is referred to as an evaporator (3), and by condensation of the working medium (2) in a section of the heat pipe (1) which is referred to as a condenser (4), the heat pipe (1) extending from the inner conductor (21) to the outer conductor (22), and having an isolation hollow body (5) in order to form an electrical isolation gap (7), and the evaporator (3) being in close thermal contact with the inner conductor (21) and the condenser (4) being in close thermal contact with the outer conductor (22) and the heat pipe (1) having a flexibly deformable section (9) which serves to avoid high mechanical loads on the heat pipe (1) which are caused by vibrations of the generator circuit breaker (20) during switching processes and resultant relative movements between the inner conductor (21) and the outer conductor (22).

2. Generator circuit breaker (20) according to Claim 1, **characterized in that** the condenser has an apparatus for heat emission (8).

3. Generator circuit breaker (20) according to one of the preceding claims, **characterized in that** the heat pipe (1) extends to outside the outer conductor (2).

4. Generator circuit breaker (20) according to one of the preceding claims, **characterized in that** the heat pipe (1) is in the form of a thermal siphon.

5. Generator circuit breaker (20) according to one of the preceding claims, **characterized in that** the heat pipe (1) contains a means (10) for feeding back condensed working medium (2) to the evaporator (3) by means of capillary forces.

6. Generator circuit breaker (20) according to one of Claims 2 to 5, **characterized in that** the evaporator (3) is integrated in the inner conductor (21).

7. Generator circuit breaker (20) according to one of Claims 2 to 6, **characterized in that** the circuit breaker has a supporting insulator (24) in order to support the inner conductor (21), and **in that** one section of the heat pipe (1) runs within the supporting insulator (24).

8. Generator circuit breaker (20) according to one of Claims 2 to 7, **characterized in that** the heat pipe (1) also contains an auxiliary gas (6), in addition to the working medium (2), in order to increase the dielectric strength of the isolation gap (7).

9. Generator circuit breaker (20) according to one of Claims 2 to 7, **characterized in that** the heat pipe (1) is designed in such a way that an electrical high voltage (HV) of up to HVₘₐₓ can be applied permanently across the isolation gap (7) in a temperature range from Tₘᵢₙ to Tₘₐₓ which can be measured at the evaporator (3), without this resulting in any breakdowns in the area of the isolation gap (7), **characterized in that** the heat pipe (1) contains a partial pressure (p) of an auxiliary gas (6), which is not the same as the working medium (2), with the provision of the auxiliary gas (6) resulting in no breakdowns occurring in the area of the isolation gap (7) when the high voltage HVₘₐₓ is present across the isolation gap (7) at the temperature Tₘᵢₙ while, in contrast, breakdowns occur in the area of the isolation gap (7) when the auxiliary gas (6) is not present but the high voltage HVₘₐₓ is present across the isolation gap (7) at the temperature Tₘᵢₙ.

10. Generator circuit breaker (20) according to one of the preceding claims, **characterized in that** the inner conductor (21) has a plurality of sections (23) which are each provided with at least one heat pipe (1).

11. Generator circuit breaker (20) according to one of the preceding claims, **characterized in that** the circuit breaker has a plurality of switch poles (20R, 20S, 20T), each having an inner conductor (21R, 21S, 21T) and each having an outer conductor (22R, 22S, 22T), and each having at least one heat pipe (1).

12. Method for cooling an elongated inner conductor (21), which is surrounded by an outer conductor (22) like a housing, of a generator circuit breaker according to one of Claims 1-11, **characterized in that** a working medium (2) is vaporized by absorption of thermal energy from the inner conductor (21), and is condensed, with heat being emitted, on the outer conductor (22) or on a cooling rib arrangement, which is attached to the outer conductor (22), with the vaporization and condensation taking place at different electrical potentials.

13. Circuit breaker (20) having an elongated inner conductor (21) and an outer conductor (22) which surrounds the inner conductor (21) like a housing,
at least one heat pipe (1) being provided in order to dissipate thermal energy from the inner conductor (21),
which heat pipe (1) contains a working medium (2) for dissipation of the thermal energy by vaporization of the working medium (2) in a section of the heat pipe (1) which is referred to as an evaporator (3), and by condensation of the working medium (2) in a section of the heat pipe (1) which is referred to as a condenser (4), **characterized in that** the heat pipe extends from the inner conductor (21) to the outer conductor (22), and has an isolation hollow body (5) in order to form an electrical isolation gap (7), and the evaporator (3) is in close thermal contact with the inner conductor (21) and the condenser (4) is in close thermal contact with the outer conductor (22) and that the heat pipe (1) has a flexibly deformable section (9), and
**in that** the isolation hollow body (5) is a tubular piece of insulating material (12) in particular a glass-fibre-reinforced plastic, which serves as carrier material (12) and into which diffusion inhibitors (13) are introduced.

14. Circuit breaker (20) having an elongated inner conductor (21) and an outer conductor (22) which surrounds the inner conductor (21) like a housing,
at least one heat pipe (1) being provided in order to dissipate thermal energy from the inner conductor (21),
which heat pipe (1) contains a working medium (2) for dissipation of the thermal energy by vaporization of the working medium (2) in a section of the heat pipe (1) which is referred to as an evaporator (3), and by condensation of the working medium (2) in a section of the heat pipe (1) which is referred to as a condenser (4), **characterized in that** the heat pipe extends from the inner conductor (21) to the outer conductor (22), and has an isolation hollow body (5) in order to form an electrical isolation gap (7), and the evaporator (3) is in close thermal contact with the inner conductor (21) and the condenser (4) is in close thermal contact with the outer conductor (22) and that the heat pipe (1) has a flexibly deformable section (9),
**in that** the heat pipe also contains an auxiliary gas, in addition to the working medium, in order to achieve a higher dielectric strength of the isolation gap and
**in that** an auxiliary gas collecting volume is present at the condenser and is filled with a large portion of the electrically insulating auxiliary gas or the entire electrically insulating auxiliary gas under operating conditions, and the auxiliary gas collecting volume is variable and increases with the temperature and the internal pressure of the heat pipe (1).

## Revendications

1. Commutateur de générateur (20) comprenant un conducteur interne (21) étendu en longueur et un conducteur externe (22) qui entoure le conducteur interne (21) à la manière d'un boîtier, au moins un tube échangeur de chaleur (1) étant prévu pour évacuer l'énergie thermique du conducteur interne (21), ledit tube échangeur de chaleur (1) comprenant un fluide de travail (2) pour évacuer l'énergie thermique par évaporation du fluide de travail (2) dans une section du tube échangeur de chaleur (1) appelée évaporateur (3) et condenser le fluide de travail (2) dans une section du tube échangeur de chaleur (1) appelée condenseur (4), le tube échangeur de chaleur (1) s'étendant du conducteur interne (21) au conducteur externe (22) et présentant un corps creux isolant (5) pour former une section isolante électrique (7) et l'évaporateur (3) se trouvant en contact thermique étroit avec le conducteur interne (21) et le condenseur (4) en contact thermique étroit avec le conducteur externe (22) et le tube échangeur de chaleur (1) présentant une section souple déformable (9) qui sert à éviter les contraintes mécaniques élevées du tube échangeur de chaleur (1), lesquelles sont produites par les secousses du commutateur de générateur (20) lors des opérations de commutation et les mouvements relatifs ainsi provoqués entre le conducteur interne (21) et le conducteur externe (22).

2. Commutateur de générateur (20) selon la revendication 1, **caractérisé en ce que** le condenseur présente un dispositif de dissipation de la chaleur (8).

3. Commutateur de générateur (20) selon l'une des revendications précédentes, **caractérisé en ce que** le tube échangeur de chaleur (1) s'étend jusqu'à l'extérieur du conducteur externe (2).

4. Commutateur de générateur (20) selon l'une des revendications précédentes, **caractérisé en ce que** le tube échangeur de chaleur (1) est configuré comme un thermosiphon.

5. Commutateur de générateur (20) selon l'une des revendications précédentes, **caractérisé en ce que** le tube échangeur de chaleur (1) comprend un moyen (10) de remise en circulation du fluide de travail condensé (2) vers l'évaporateur (3) par des forces capillaires.

6. Commutateur de générateur (20) selon l'une des revendications 2 à 5, **caractérisé en ce que** l'évaporateur (3) est intégré dans le conducteur interne (21).

7. Commutateur de générateur (20) selon l'une des revendications 2 à 6, **caractérisé en ce qu'**il présente un isolateur support (24) pour supporter le conducteur interne (21) et **en ce qu'**une section du tube échangeur de chaleur (1) passe à l'intérieur de l'isolateur support (24).

8. Commutateur de générateur (20) selon l'une des revendications 2 à 7, **caractérisé en ce que** le tube échangeur de chaleur (1) comprend encore un gaz auxiliaire (6) en plus du fluide de travail (2) pour augmenter la résistance au claquage de la section isolante (7).

9. Commutateur de générateur (20) selon l'une des revendications 2 à 7, **caractérisé en ce que** le tube échangeur de chaleur (1) est configuré de telle sorte qu'il est possible d'appliquer en permanence à la section isolante (7) une haute tension électrique (HV) jusqu'à HVₘₐₓ dans une plage de température de Tₘᵢₙ à Tₘₐₓ à mesurer sur l'évaporateur (3) sans qu'il ne se produise de claquages dans la zone de la section isolante (7), **caractérisé en ce que** le tube échangeur de chaleur (1) contient une pression partielle (p) d'un gaz auxiliaire (6) différent du fluide de travail (2), la présence du gaz auxiliaire (6) permettant d'empêcher que des claquages se produisent dans la zone de la section isolante (7) lors de l'application de la haute tension HVₘₐₓ à la section isolante (7) à la température Tₘᵢₙ, alors qu'en cas d'absence du gaz auxiliaire (6), des claquages se produiraient dans la zone de la section isolante (7) lors de l'application de la haute tension HVₘₐₓ à la section isolante (7) à la température T_{min.}

10. Commutateur de générateur (20) selon l'une des revendications précédentes, **caractérisé en ce que** le conducteur interne (21) présente plusieurs sections (23) qui sont respectivement munies d'au moins un tube échangeur de chaleur (1).

11. Commutateur de générateur (20) selon l'une des revendications précédentes, **caractérisé en ce qu'**il présente plusieurs pôles de commutateur (20R, 20S, 20T) comprenant chacun un conducteur interne (21R, 21S, 21T) et chacun un conducteur externe (22R, 22S, 22T) et chacun au moins un tube échangeur de chaleur (1).

12. Procédé de refroidissement d'un conducteur interne (21) d'un commutateur de générateur selon l'une des revendications 1 à 11, entouré par un conducteur externe (22) à la manière d'un boîtier, **caractérisé en ce qu'**un fluide de travail (2) est évaporé par absorption de l'énergie thermique du conducteur interne (21) puis condensé en délivrant de la chaleur au conducteur externe (22) ou à un arrangement d'ailettes de refroidissement qui sont fixées au conducteur externe (22), l'évaporation et la condensation ayant lieu à des potentiels électriques différents.

13. Commutateur de haute puissance (20) comprenant un conducteur interne (21) étendu en longueur et un conducteur externe (22) qui entoure le conducteur interne (21) à la manière d'un boîtier, au moins un tube échangeur de chaleur (1) étant prévu pour évacuer l'énergie thermique du conducteur interne (21), ledit tube échangeur de chaleur (1) comprenant un fluide de travail (2) pour évacuer l'énergie thermique par évaporation du fluide de travail (2) dans une section du tube échangeur de chaleur (1) appelée évaporateur (3) et condenser le fluide de travail (2) dans une section du tube échangeur de chaleur (1) appelée condenseur (4), **caractérisé en ce que** le tube échangeur de chaleur s'étend du conducteur interne (21) au conducteur externe (22) et présente un corps creux isolant (5) pour former une section isolante électrique (7) et l'évaporateur (3) se trouve en contact thermique étroit avec le conducteur interne (21) et le condenseur (4) en contact thermique étroit avec le conducteur externe (22) et **en ce que** le tube échangeur de chaleur (1) présente une section souple déformable (9) et **en ce que** le corps creux isolant (5) est une pièce de forme tubulaire en matériau isolant (12), notamment une matière plastique renforcée de fibres de verre, qui fait office de matériau porteur (12) et dans lequel sont incorporés des inhibiteurs de diffusion (13).

14. Commutateur de haute puissance (20) comprenant un conducteur interne (21) étendu en longueur et un conducteur externe (22) qui entoure le conducteur interne (21) à la manière d'un boîtier, au moins un tube échangeur de chaleur (1) étant prévu pour évacuer l'énergie thermique du conducteur interne (21), ledit tube échangeur de chaleur (1) comprenant un fluide de travail (2) pour évacuer l'énergie thermique par évaporation du fluide de travail (2) dans une section du tube échangeur de chaleur (1) appelée évaporateur (3) et condenser le fluide de travail (2) dans une section du tube échangeur de chaleur (1) appelée condenseur (4), **caractérisé en ce que** le tube échangeur de chaleur s'étend du conducteur interne (21) au conducteur externe (22) et présente un corps creux isolant (5) pour former une section isolante électrique (7) et l'évaporateur (3) se trouve en contact thermique étroit avec le conducteur interne (21) et le condenseur (4) en contact thermique étroit avec le conducteur externe (22) et **en ce que** le tube échangeur de chaleur (1) présente une section souple déformable (9), **en ce que** le tube échangeur de chaleur, en vue d'atteindre une résistance au claquage plus élevée sur la section isolante, contient encore un gaz auxiliaire en plus du fluide de travail et **en ce qu'**il existe au niveau du condenseur un volume d'accueil de gaz auxiliaire qui, sous les conditions opérationnelles, est rempli avec une grande partie du gaz auxiliaire électriquement isolant ou avec la totalité du gaz auxiliaire électriquement isolant et le volume d'accueil de gaz auxiliaire est variable et croît avec la température et la pression interne du tube échangeur de chaleur (1).
